(19) Europäisches Patentamt
European Patent Office
Office européen des brevets

(11) EP 0 549 419 B1

# (12) EUROPEAN PATENT SPECIFICATION

(45) Date of publication and mention
of the grant of the patent:
**22.01.1997 Bulletin 1997/04**

(51) Int Cl.⁶: **G01V 1/40**, E21B 47/00

(21) Application number: **92403436.6**

(22) Date of filing: **17.12.1992**

(54) **Method and apparatus for hydraulic isolation determination**

Verfahren und Gerät zur hydraulischen Isolationsbestimmung

Procédé et dispositif pour déterminer l'isolation hydraulique

(84) Designated Contracting States:
**AT DE DK ES FR GB IE IT NL**

(30) Priority: **17.12.1991 US 810772**

(43) Date of publication of application:
**30.06.1993 Bulletin 1993/26**

(73) Proprietors:
• **SCHLUMBERGER LIMITED**
**New York, N.Y. 10172 (US)**
Designated Contracting States:
**GB**
• **SERVICES PETROLIERS SCHLUMBERGER**
**F-75007 Paris (FR)**
Designated Contracting States:
**FR**
• **SCHLUMBERGER TECHNOLOGY B.V.**
**NL-2517 KM Den Haag (NL)**
Designated Contracting States:
**DE DK ES IE IT AT**
• **SCHLUMBERGER HOLDINGS LIMITED**
**Road Town, Tortola (VG)**
Designated Contracting States:
**NL**

(72) Inventors:
• **Stanke, Fred E.**
**Ridgefield, Connecticut 06877 (US)**
• **d'Angelo, Ralph M.**
**New Fairfield, Connecticut 06810 (US)**

(74) Representative: **Stoole, Brian David**
**Geco-Prakla Technical Services Inc,**
**Patent Department,**
**Schlumberger House,**
**Buckingham Gate**
**Gatwick, West Sussex RH6 0NZ (GB)**

(56) References cited:
**EP-A- 0 263 028**        **US-A- 3 401 773**
**US-A- 4 800 537**

**Description**

Background of the Invention

The present invention relates to a method and apparatus for hydraulic isolation determination of oilfield casings. More specifically, the interfaces between the various materials present in the borehole are interrogated using ultrasonic energies to characterize the materials and the bonds formed between them.

In a well completion, a string of casing or pipe is set in a wellbore and a fill material referred to as cement is forced into the annulus between the casing and the earth formation. The primary purpose of the cement is to separate oil and gas producing layers from each other and from water bearing strata. If cement fails to provide isolation of one zone from another, fluids under pressure may migrate from one zone to another, reducing production efficiency. Migration of water, in particular, produces undesirable water cutting of a producing zone and can possibly render a well non-commercial. Also, migration of hydrocarbons into aquifers is environmentally and economically undesirable. It is critical to determine whether the cement is performing its function, i.e., whether the hydrocarbon reservoirs are hydraulically secure. The term "good cement" indicates the adequate separation of zones by the cement, preventing fluid migration between the zones.

Cement failures occur in a variety of ways. For example, a complete absence of cement between the casing and the earth formation can occur. This is characterized as a gross cement failure and leads to rapid communication between zones intended to be isolated. Another type of failure arises when channelling occurs within the cement annulus, between the casing and the formation. There are three commonly occurring types of channels. First, a channel which contacts the casing is referred to as a "near channel". Second, a channel which does not contact the casing is referred to as a "far channel" or a "buried-channel". For a buried channel, the region between the channel and the casing is usually cement. And third, a channel occupying the entire space between the casing and the formation is referred to as either a "full channel" or a "traditional channel". All these channels described above are filled with fluids such as mud or gas and all are potential threats to hydraulic isolation.

Another condition which occurs, but which is not generally viewed as a cement failure, is known as micro-annulus. This condition occurs when the cement that has filled the annulus is not properly bonded to the casing resulting in a very narrow fluid-filled annulus immediately outside the casing. This annulus is very small and does not affect fluid communication between layers effectively preserving the hydraulic security function of the cement.

A completed well includes a number of interfaces at the junctures of the differing materials within the wellbore. A first interface exists at the juncture of the fluid in the casing and the casing itself. The casing is referred to as a first material and is typically made of steel. A second interface is formed between the casing and a second material adjacent to the exterior of the casing. If cement is properly placed between the casing and the formation, providing hydraulic isolation, the second interface exists between the casing (first material) and the cement (second material). Further, a third interface exists between the cement and a third material which is the earth formation.

Imperfect cementing operations can result in a variety of interface conditions. A channel contacting the casing results in the second interface being between the casing (first material) and a fluid (second material). In this case, the third interface is formed between a fluid (second material) and the earth formation (third material) where a full channel exists. Alternatively, the third interface is formed between a fluid (second material) and the cement (third material) where a near channel exists. A channel not contacting the casing, results in the second interface being between the casing (first material) and the cement (second material) and the third interface being between the cement (second material) and a fluid (third material). Existence of an interface at the juncture of cement and fluid causes a potential lack of hydraulic isolation.

The problem of investigating the fill material or cement outside a casing with a tool located inside the casing has lead to a variety of cement evaluation techniques using acoustic energy. These techniques can be categorized into sonic cement evaluation (SCE) and ultrasonic cement evaluation (UCE).

Current sonic cement evaluation can be divided into two distinct categories. The first evaluates the Cement Bond Index (CBI) which attempts to measure the percentage of the circumference of the cement adhering to the casing. The second generates a variable density log which qualitatively evaluates the cement fill in the annulus by identifying a head wave generated by a compressional wave in the formation. Both sonic techniques use non-directional or slightly directional sources and receivers and depend on energy propagation essentially parallel to the surfaces of the casing.

One SCE technique is described in U.S. Patent No. 3,401,773 to Synott, III and assigned to Schlumberger Technology Surveying Corp. Synott describes a cement logging technique using a tool employing a conventional, longitudinally spaced, sonic transmitter and receiver. The signal traveling through the casing is processed and a portion of the signal affected by the presence or absence of cement is extracted. The extracted segment is interrogated to provide a measurement of its energy as an indication of the presence or absence of cement outside the casing. This technique provides useful information about cement defects at the second interface.

Current ultrasonic cement evaluation also concentrates on the second interface to determine whether cement or mud is adjacent to the casing in an annulus between the casing and the earth formation. A number of known techniques use a pulse-echo method. A single transducer transmits energy into the casing at near-normal incidence and receives echoes. The signal excites a resonance within the casing and the properties of the resonance are measured and interpreted to indicate whether cement or undisplaced mud lies just outside the casing. The main limitation of such techniques is that they concentrate on the second interface ignoring the effects of the third or further interfaces.

Ultrasonic pulse-echo techniques for determining the thickness of materials have been extensively proposed in the art. For example, U.S. Patent No. 2,538,114 to Mason describes an apparatus for measuring the thickness of a material by noting its resonance frequency when the material is irradiated with ultrasonic energy. In U.S. Patent No. 4,003,244 to O'Brien, et al., the thickness of a material is measured by employing a pulse echo technique.

U.S. Patent No. 4,255,798 to Havira describes methods and apparatus for acoustically investigating a casing in a borehole to determine whether cement is present just outside the casing. Casing thickness is also determined. The techniques employ an acoustic pulse source having a frequency spectrum selected to excite a thickness resonance in the insonified portion of the casing. The thickness resonance exists as acoustic reverberations between the inner and outer walls of the casing, i.e., trapped energy. The duration of the reverberations depends on the rate of acoustic energy leaking into adjacent media. The acoustic return from the casing can be thought of in two distinct portions. The first appears as a large amplitude pulse which represents the energy reflected from the first fluid-steel interface, i.e., the inside surface of the casing. The second appears as a decaying resonance which represents the reverberating energy trapped within the casing that has leaked back into the fluid within the casing. The received acoustic pulse is then processed to determine casing thickness or to evaluate the quality of the cement bond to the casing.

U.S. Patent No. 4,800,537 describes a method and apparatus for determining cement conditions in a cased well. In the approach described here, the acoustic velocity of a signal in the cement is measured and compared with a known acoustic velocity for cement. This is intended to allow the identification of voids and foreign material in the cement.

European Patent No. 0,236,028 describes a method of evaluating cement properties in a borehole by transmitting and receiving acoustic signals through the cement over at least two different spacings and using these two measurements to produce a compensated attenuation rate signal and a coupling attenuation signal.

According to the present invention, there is provided a method of interrogating a cased borehole environment to determine properties of materials present in the borehole, the method comprising: (a) introducing acoustic energy into the casing at a first position in the borehole; (b) receiving the propagated acoustic energy at a second position in the borehole a predetermined distance from the first position; and (c) analyzing the received energy and generating data determinative of the path along which the acoustic energy has travelled; the method being characterized by introducing the acoustic energy into the casing at a predetermined initial angle substantially between the compressional-critical angle and the shear-critical angle to a first interface so as to propagate through the casing at the predetermined angle, the acoustic energy propagating through a second material and a third material to a second interface and a third interface in the borehole, detecting a shear component of the received energy, and analyzing the shear component to generate data representative of properties of the materials in the borehole and the nature of the third interface.

The present invention allows hydraulic isolation determinations to be made by considering the entire volume of the annulus between the casing and the earth formation and characterizing the third interface formed at the juncture of a second material contacting the outside of the casing (first material) and a third material adjacent to and outside the second material. Interrogation of the third interface is performed by directing an acoustic pulse at a segment of the casing. This pulse passes through the casing and into the second material. The signal is then reflected from the third interface and passes back through the second material as well as the casing and into the borehole where it is detected.

Apparatus according to the invention comprises a housing, a transmitter mounted in the housing for introducing acoustic energy into the casing, a receiver mounted in the housing at a predetermined distance from the transmitter for detecting acoustic energy, and processing means for analyzing the detected energy and generating data representative of properties of materials in the borehole, and is characterized in that the transmitter transmits acoustic energy into the casing at a predetermined initial angle substantially between the compressional-critical angle and the shear-critical angle to a first interface, the acoustic energy propagating through a second material and a third material to a second interface and a third interface in the borehole, the receiver detecting acoustic shear energy in the form of a beam which arrives at the first interface propagating at an angle corresponding to the predetermined initial angle, and the processing means analyzing detected shear energy and generating data determinative of the path along which the acoustic energy has travelled and representative of properties of the materials in the borehole and the nature of the third interface.

The present technique includes advantages over ultrasonic cement evaluation because it utilizes non-normal propagation between the compressional and shear critical angles in the casing (intercritical), using a pitch-catch geometry where the transmitter and receiver are separated from one another. This configuration examines a signal which contains discrete arrivals representing acoustic echoes from distinct interfaces. Processing concentrates on an analysis of each arrival independently of arrivals from other interfaces, rather than on a casing resonance containing all interface echoes, as do UCE techniques. The present technique achieves superior results to sonic cement evaluation because there is a strong radial component of propagation and the transducers are highly directional. The directionality of the transducers distinguishes the method from typical surface seismic techniques which use essentially omni-directional transducers.

The basic advantage of a hydraulic isolation determination apparatus and method in accordance with the present invention is that the signals resulting upon encountering the various interfaces are well separated in time and space. This allows accurate analysis of the individual components of the recorded signals. These components are characterized to provide an indication of the quality of isolation achieved by the fill material or cement outside the casing. Additionally, since energy which has interacted primarily with the casing exists as separate components of the resulting signal, casing thickness can be determined. Separation of components is accomplished by configuring the transducers at an angular position, separated by a predetermined distance, and by using compact excitation pulses.

A further understanding of the nature and advantages of the invention may be realized with reference to the remaining portions of the specification and drawings.

Brief Description of the Drawings

Figure 1 is a cross-sectional diagram of a completed borehole;
Figure 2 is a schematic diagram of a logging operation;
Figure 3 is an illustration of a transmitter and a receiver along with the various components of an acoustic signal directed from the transmitter into the wall of the borehole;
Figure 4 is an illustration of the travel paths of acoustic energy components through various materials in the borehole;

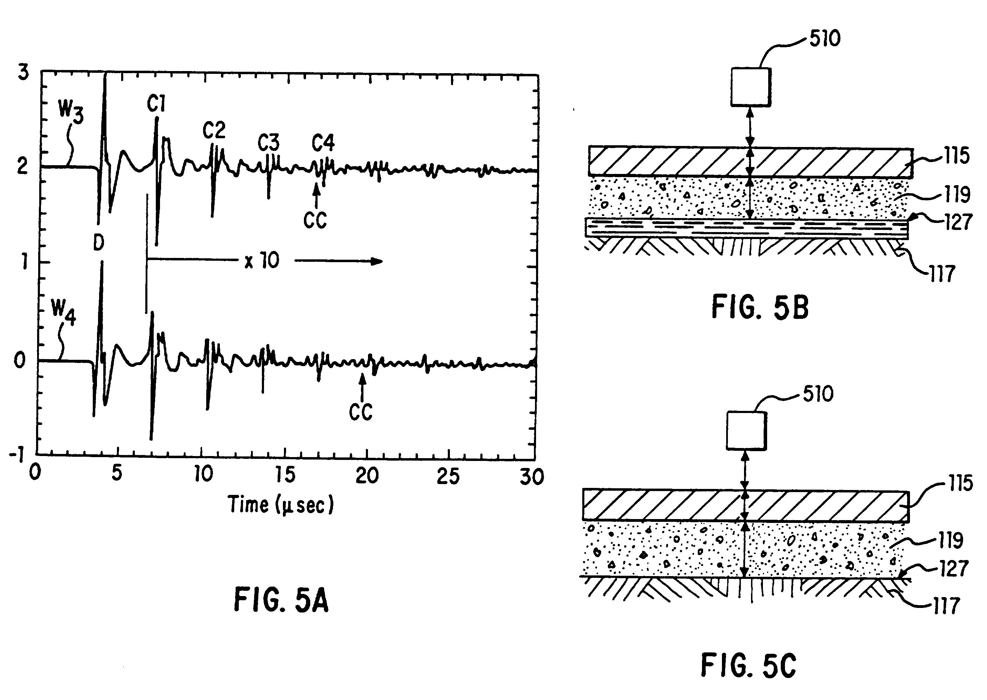

Figure 5 is an illustration of acoustic energy arrivals which have travelled along paths in a borehole wherein the acoustic energy is generated by a transducer and received along a line perpendicular to the wall of the borehole;
Figure 6 is an illustration of various embodiments of an apparatus for interrogating the interfaces in a borehole;
Figure 7 is an illustration of the first and second order, compressional and shear signals propagating in the different media in the borehole; and
Figure 8 is an illustration of an alternative embodiment of a hydraulic isolation determination apparatus.

Detailed Description of the Preferred Embodiments

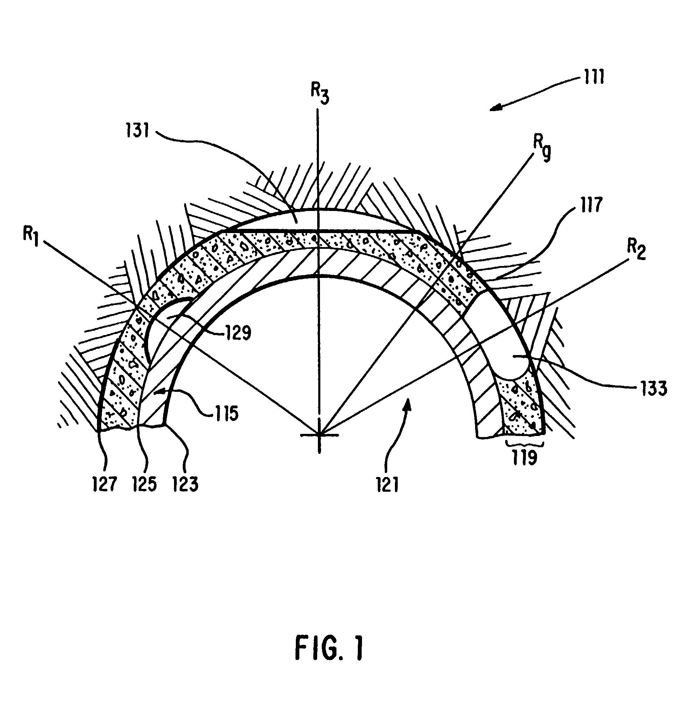

Figure 1 is a cross-sectional diagram showing materials used in a completed borehole to achieve hydraulic isolation. A borehole 111 is cased with a first material, typically steel pipe 115. Outside and adjacent first material 115 lies second material 119. Second material 119 is usually a fill material, commonly referred to as cement, which is pumped into the annulus between casing 115 and earth formation 117. The cement hydrates to retain casing 115 rigidly in position. More importantly, it completely fills the annulus between casing 115 and earth formation 117 sealing off the hydrocarbon strata from the other layers so that when casing 115 and the cement (second material 119) are subsequently perforated, the hydrocarbons enter directly into casing 115 and migration of fluids between adjacent formation layers is prevented. Fluid 121, usually in the form of mud, is pumped into borehole 111 to the inside of casing 115. This fluid 121 maintains equilibrium in borehole 111 so that pressures exerted by formation 117 do not cause borehole 111 to cave in or blow out.

In accordance with the above description of borehole 111, a number of interfaces are formed between the various materials. The first interface 123 exists along the juncture between fluid 121 (usually mud) and casing 115. Ideally, second material 119 in the form of cement completely fills the space between casing 115 and earth formation 117. Such a situation is shown along radial line $R_g$. A second interface 125 is formed between casing 115 and cement and a third interface 127 emphasized by the bold line, exists at the juncture of cement and earth formation 117. Unfortunately, fill material or cement does not always completely fill the space between casing 115 and earth formation 117.

When cement does not completely fill the space, three possible conditions arise. The first condition is shown along radial line $R_1$. A near channel 129 exists between casing 115 and cement . Instead of second interface 125 existing between casing 115 and cement, it is formed between casing 115 and the fluid of near channel 129. In such a situation, the fluid of near channel 129 is second material 119. Additionally, instead of third interface 127 existing between cement and earth formation 117, it is formed at the juncture of a fluid (second material 119) and cement. Another type of near channel is shown along radial line $R_2$. This near channel is known as a full channel 133 because fluid extends completely across the annulus to earth formation 117. As in the case of near channel 129, full channel 133 also has a second interface between first material 115 and a fluid (second material 119). However, the third interface for full channel 133 is between a fluid and earth formation 117.

The third condition occurs when a channel is formed in the space between second material 119 and earth formation 117, i.e. a channel that does not contact first material 115. This condition is shown along radial line $R_3$ and is referred to as a buried channel 131. For such a channel, second interface 125 is formed between casing 115 and second

EP 0 549 419 B1

material 119 (cement), and third interface 127 is formed at the juncture of second material 119 and the fluid of buried channel 131.

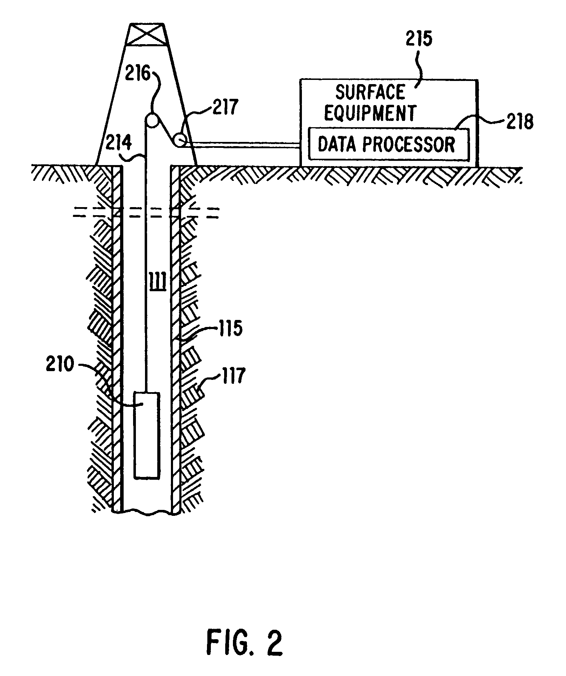

Figure 2 is a schematic diagram of a logging operation. Tool or sonde 210 for acquiring acoustic data is located in borehole 111 penetrating earth formation 117. Sonde 210 is preferably lowered in the borehole by armored multiconductor cable 214 and slowly raised by surface equipment 215 over sheave wheel 216 while data measurements are recorded. The depth of the tool is measured by depth gauge 217 which measures cable displacement.

Sonde 210 acquires acoustic data by emitting an acoustic pulse and detecting its return waveform. The sonde comprises at least one source or transmitter and at least one detector or receiver. The transmitter produces a pulse upon excitation. The pulse is directed into casing 115 and a resulting signal is detected by the receiver. The return waveforms can be analyzed by the sonde *in situ*, analyzed by data processor 218 at the surface, or stored, either in the sonde or at the site for analysis at a remote location.

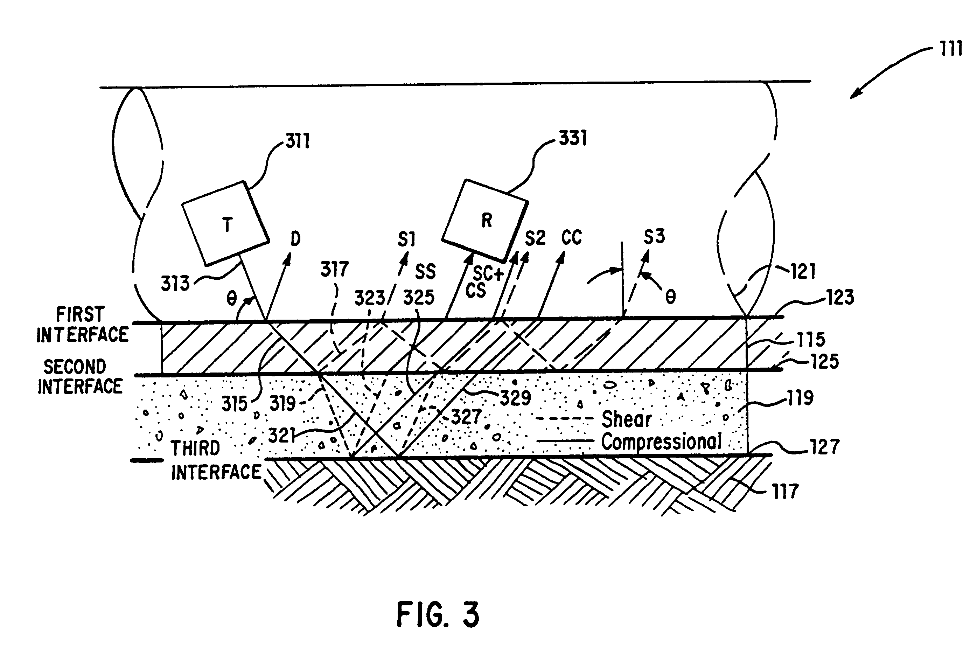

Figure 3 is an illustration of a transmitter 311 and a receiver 331, mounted in the housing of sonde 210. Transmitter 311 and receiver 331 are transducers capable of either transmitting or receiving acoustic energy. Preferably, at least one of the transducers is of the type for operating with acoustic energy in the form of a beam. If transmitter 311 is of a beam-type, receiver 331 may be either a beam-type or a point-source transducer. The reason for this is that acoustic energy transmitted by transmitter 311 in the form of a beam will arrive at receiver 331 in the form of a beam provided it is located in the appropriate position. Alternatively, if transmitter 311 is a point source, as long as receiver 331 is a beam-type, it will detect a beam of acoustic energy which has travelled along a path of interest. Of course, if both transmitter 311 and receiver 331 are beam-type transducers, the apparatus will function in accordance with the invention.

The various paths of components of an acoustic energy signal detected at receiver 331 are also shown in Fig. 3. Transmitter 311 transmits a pulse of acoustic energy 313. When transmitter 311 transmits acoustic energy 313 in the form of a beam it does so at an angle to first interface 123 with a width roughly the same as transmitter 311. When pulse 313 strikes casing 115, some of the energy D is reflected while the remainder continues into casing 115 at a well-defined angle $\theta$ from first interface 123. Preferably, angle $\theta$ is between the compressional critical angle and the shear critical angle for casing 115, providing a strong shear component transmitted into casing 115 while providing no compressional component. Shear component 315 passes through casing 115 and strikes second interface 125 at the back of casing 115. A portion of its energy 317 is reflected while the remainder is transmitted into second material 119. If second material 119 is cement, the remaining portion of shear component 315 is split into two cement components. The first cement component is a shear component 319. The second cement component is a compressional component 321. Each of these components propagates across the cement and is partially reflected at third interface 127. At this point, each component is again split into two reflected components referred to as Third Interface Echoes (TIE's) which propagate back towards casing 115.

Upon reflection from third interface 127, shear component 319 is split into a reflective shear-shear component 323 and a reflective shear-compressional component 325. Additionally, compressional component 321 is split into a compressional-shear component 327 and a compressional-compressional component 329 upon reflection from third interface 127.

Each of the four TIE's 323, 325, 327, and 329 propagate back through second material 119 to second interface 125. Upon reaching second interface 125, the four TIE's continue through casing 115 exiting at first interface 123 into fluid 121. A receiver 331, positioned and angled properly in borehole 111, detects one or more of the components as they propagate through fluid 121. The above description applies to the situation where transmitter 311 transmits a beam of acoustic energy which is received by either a point-source receiver or a beam-type receiver. In the case where transmitter 311 is a point-source transducer, receiver 331 is a beam-type transducer which receives only energy which has travelled along a predetermined predicted path.

The four TIE's are each an individual component of the original acoustic energy signal directed into casing 115: The first TIE is shear-shear component 323 of pulse 313 and it is labeled SS; the second TIE is the shear-compressional component 325 of pulse 313 and it is labeled SC; a third TIE is compressional-shear component 327 labeled CS; and the fourth TIE is compressional-compressional component 329 labeled CC. For each of the labels, the first letter indicates the polarization (shear or compressional) on the trip from the second to the third interface, while the second letter indicates the polarization of the trip back from the third interface to the second. Upon receiving TIE's 323-329, processing is performed to characterize the materials in the borehole as a function of the path of the acoustic energy originally introduced at the front surface of casing 115. Given that parameters such as casing thickness, standoff (distance between transducers and first interface) and offset (distance between transducers) positions of transducers 311 and 331, and the properties of fluid 121 and second material 119 are known, the thickness of second material 119 is determined from the travel time of the TIE's. Additionally, properties of the formation are characterized from the amplitude and polarity of the TIE's.

The processing must take into account certain "casing" signals which exist upon transmitting acoustic energy 313 from transducer 311 and which are detected at receiver 331. A majority of acoustic energy 313 emitted from transmitter 311 is reflected at first interface 123 before it ever enters casing 115. This energy is shown as direct reflection D. The remaining portion enters casing 115 preferably at angle θ which is less than the compressional critical angle allowing only shear energy 315 to propagate through first material 115. The dominant casing signals which reverberate in casing 115 never propagate beyond second interface 125. They are reflected back into casing 115 at second interface 125. This reflected energy travels through casing 115 reaching first interface 123 where a portion of it forms casing echo S1. The remainder reflects back into casing 115 to repeat the cycle, creating casing echoes S2, S3, ..., etc.

The operation of transducers 313 and 331 to transmit acoustic energy into caing 115 at at angle θ spatially spreads arrival D and casing echoes S1, S2, S3, etc., away from transmitter 311, along casing 115. Properly positioned, receiver 331 receives portions of a limited number of casing echoes S1, S2, S3 etc. but not all of the casing echoes. In Fig. 3, receiver 331 is shown receiving S1 and S2, but not S3, S4, etc. The components of interest, namely the TIE's arrive between S1 and S2 and are detected by receiver 331 as shown in Fig. 3. These components are analyzed without interpreting or subtracting the later casing reverberations produced upon continued reflections between first interface 123 and second interface 125 and which arrive outside the range of reception for receiver 331.

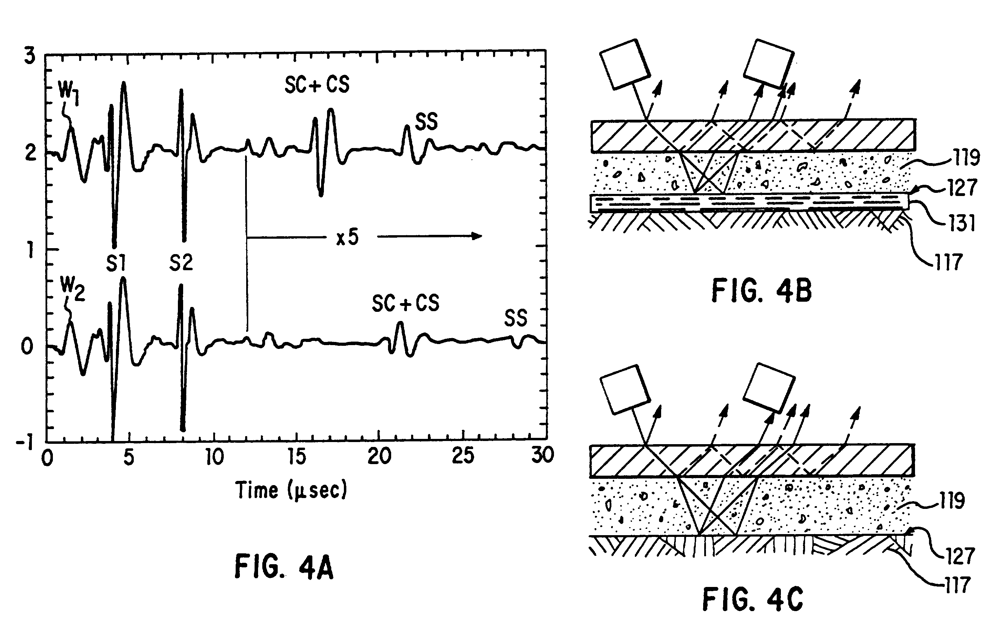

Figure 4 is an illustration of waveforms received from two different third interface conditions. Each waveform includes several separate echo arrivals whose labels correspond to those described with reference to Figure 3. As can be clearly seen in Figure 4, the TIE's are separate in time from the casing echo arrivals. In each case, three of the TIE's are visible. CC 329 has a naturally low amplitude due to low transmission coefficients. Further, it is concentrated beyond the range of receiver 331 and is not distinguishable in either waveform. SC 325 and CS 327 occur at the same time and place and are superimposed and indistinguishable. This is the case when the thickness of second material 119 is locally uniform, as it is in Figure 4. In each case SC+CS is larger than SS 323 for two reasons: First, it is composed of two arrivals; and second, there is less compressional attenuation than shear attenuation in second material 119.

The first waveform $W_1$ corresponds to the situation where buried channel 131 exists adjacent to and outside second material 119 as shown in the corresponding borehole configuration diagram to the right of waveform $W_1$. Waveform $W_2$ represents data taken when there is no buried channel; a third interface 127 exists at the juncture between second material 119 and earth formation 117.

Three factors for a particular TIE, e.g., SC+CS, are considered in characterizing the composition of the second material and, in turn, third interface 127. The first factor is delay. Delay provides an indication of the time it takes for an echo to travel through the second material. Therefore, it represents the thickness of the second material.

The shorter the distance an echo travels, the sooner it will arrive at receiver 331. For $W_1$, each of the TIE's is sooner than in the case of $W_2$. The reason for the earlier arrivals in waveform W1 is due to the existence of buried channel 131. The thickness of buried channel 131 between second material 119 and earth formation 117 causes third interface 127 to be closer to casing 115 for waveform $W_1$.

Whereas the first factor, delay of the particular received TIE indicates the distance to third interface 127, the second and third factors provide information related to material properties. The second factor, polarity of a TIE, indicates whether buried channel 131 exists by determining the relative impedance of the materials present along the third interface. A reflection coefficient is computed for third interface 127. The reflection coefficient as calculated is a function of the impedances of the second material and third material as well as other trigonometric functions dependent on the transmission and reflection angles. However, for simplicity, the reflection coefficient may be approximated by the same equations that are used to calculate the reflection coefficient of a signal transmitted at normal incidence:

$$R_3 = \frac{Z_3 - Z_2}{Z_3 + Z_2} \qquad (1)$$

$$Z_n = V_n \rho_n \qquad (2)$$

where

$R_3$ is the reflection coefficient at the third interface; and
$Z_n$ is the impedance of the nth material.
and $V_n$ is the velocity of a wave through the nth material; and
$\rho_n$ is the density of the nth material.

An examination of equation (1) reveals that the sign (polarity) of the reflection coefficient is positive (+) when the third material has a higher impedance than the second material. The sign (polarity) is negative (-) when the opposite is true.

Typically, cement impedance is higher than that of a gas or undisplaced mud and lower than that of rock. Therefore, when a buried channel is present between the cement and the earth formation, the polarity of the reflection coefficient of the third interface is opposite in sign as compared to that of a third interface where no buried channel exists. In fact, component SC+CS of waveform $W_1$ and component SC+CS of waveform $W_2$ have visibly opposite polarities. As a result, the TIE polarities distinguish a formation echo from a buried channel echo. Table 1 below shows the possible interpretations when second material 119 is cement.

TABLE 1

| Second Material | Third Material | Sign | Characterization |
|---|---|---|---|
| cement | mud | - | Buried channel |
| cement | high impedance formation | + | Effective isolation |
| cement | low impedance formation | - | False negative isolation |

As can be seen from Table 1, earth formation having an acoustic impedance lower than the cement, e.g. very soft rock, is problematic. This is because it gives a "false negative isolation" characterization. However, since the problem is recognized, it can be anticipated by considering other borehole environment characteristics as measured.

The third factor used to characterize the third interface is the amplitude of the TIE. The amplitude of component SC+CS indicates the relative impedances and attenuation coefficients of the different materials.

Computation of amplitude is performed in accordance with the following equation:

$$A = T_2 \, e^{-\alpha_3 l_3} R_3 \tag{3}$$

where,

$T_n$ is the transmission coefficient at a particular interface;
$R_n$ is the reflection coefficient at a paraticular interface;
$\alpha_n$ is the attenuation coefficient in a particular material; and
$l_n$ is the thickness of a particular material.

For example, if the impedances and attenuation coefficients in the first and second materials are known, the impedance of the formation can be determined from the amplitude using equation (1).

To properly configure transmitter 311 and receiver 331 to maximize the sensitivity of the detected signal to the desired interface and minimize the sensitivity to unwanted reflections, e.g. measuring third-interface reflections separated from casing reverberations, a number of parameters must be considered. The transmission and reception angles, the transducer spacing, and the distances from the casing depend on such transducer parameters as angular spectrum, beamwidth, and bandwidth. Also, considerations of the local area of investigation include cement and casing dimensions and acoustic properties, as well as the acoustic properties of the borehole fluid. Many of these parameters depend on one another making optimization of transducer configuration complex.

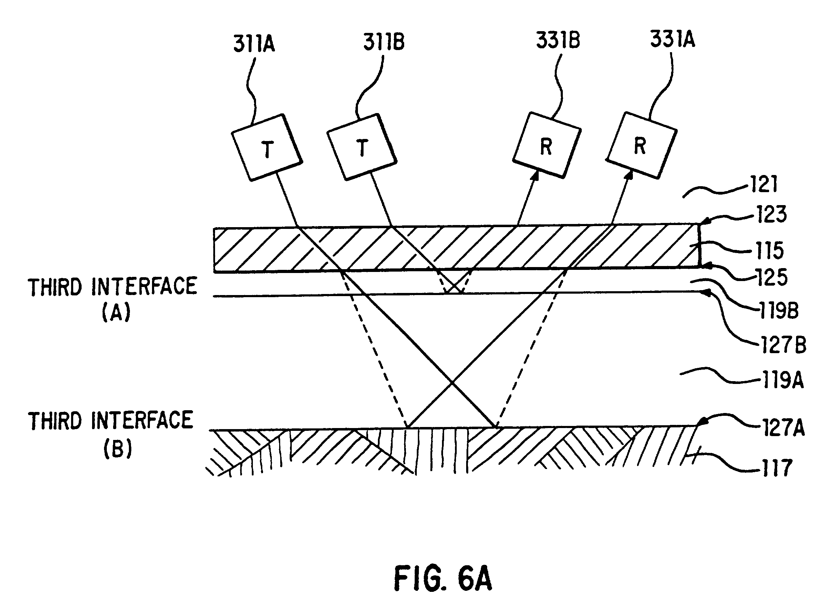

If second material 119 occupies a thick annular space between casing 115 and earth formation 117, the desired TIE may miss a single receiver placed at a particular distance from a single transmitter. One possible solution which anticipates this problem is to alter the relative position of receiver 331 with respect to transmitter 311 based on information obtained by probing the borehole wall. An alternative approach is shown in Figure 6A. A wider range of coverage is achieved for varying annular thicknesses by employing a group of transmitter-receiver pairs. Preferably, each corresponding pair has a common center point to facilitate processing. Receiver 331A detects TIEs from third interface 127A and originally transmitted by transmitter 311A. Similarly, receiver 331B detects TIEs from third interface 127B and originally transmitted from transmitter 311B. For each transmitter-receiver pair, the spacing is set to capture a time window during which the third interface echoes are expected as calculated for that particular distance range. Detection of a third interface echo with closely spaced pair 311B-331B functions well for formations where the second material is relatively thin. However, this same pair would miss a signal reflected in a formation with a thick second material. Therefore, a wider spaced pair, 311A-331A, is configured with the transducers farther apart. In the embodiment of Figure 6A, each of transmitters 311 and receivers 331 are located at an equal distance from first interface 123.

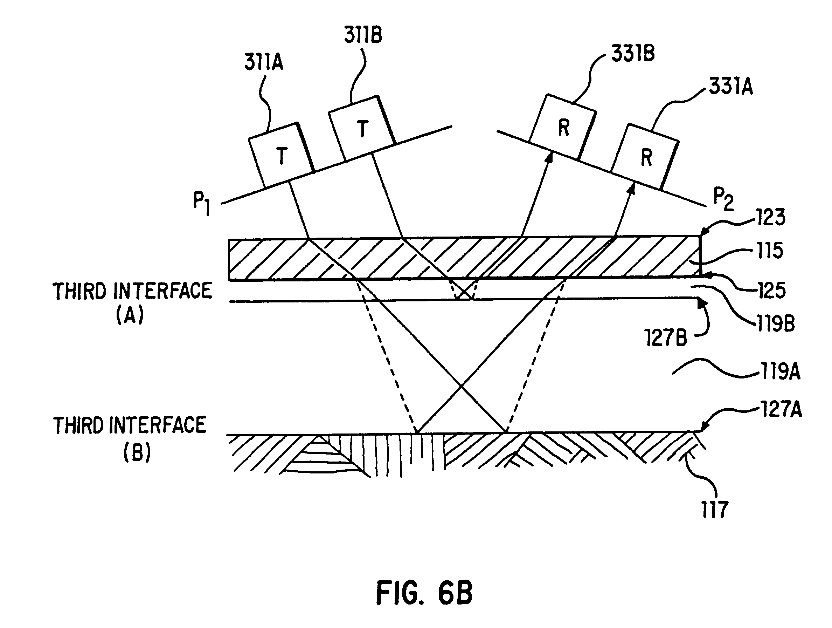

In an alternative embodiment, shown in Figure 6B, transmitters 311 are shifted so that the faces of the transmitters lie in a single plane $P_1$. In addition, the faces of the receivers 331 are aligned on a single plane $P_2$. The advantage of situating transmitters 311 along plane $P_1$ and receivers 331 along plane $P_2$, angled equal but opposite to plane $P_1$, is to simplify construction and reduce attenuation in the mud for signals which penetrate deeper into the annulus

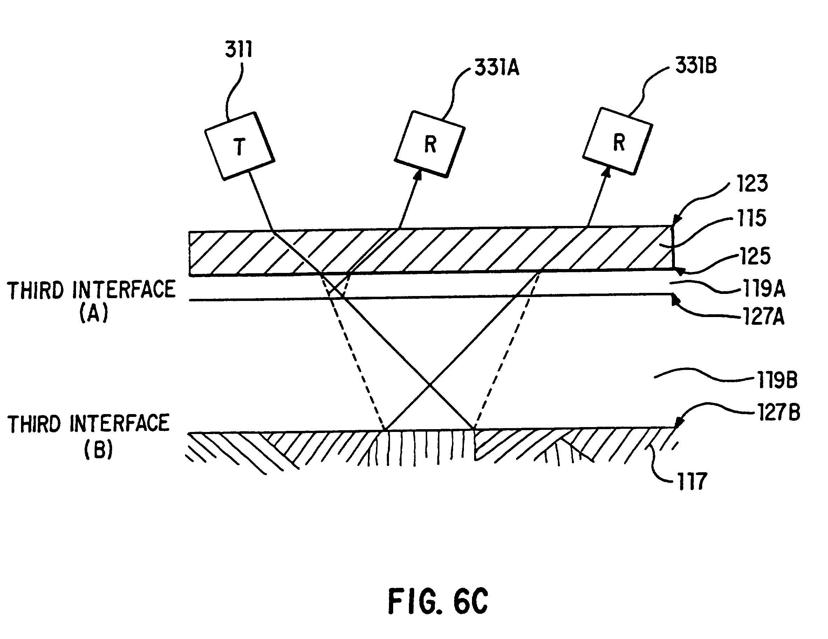

A third alternative is to use a single transmitter 311 with multiple receivers 331. Such a configuration is shown in Figure 6C. This configuration gains the advantage of a reduced number of transmitters thereby reducing cost. Of course, a single receiver with multiple transmitters would work equally well.

Other configurations may include systems with more than two transmitters and more than two receivers. In addition, the configuration of Figure 6C may be altered so that receivers 331 are situated along plane $P_2$ as in Figure 6B. Or, multiple transmitters situated along a single plane can be spaced apart from a single receiver. Finally, all transmitters 311 and receivers 331 in the aforementioned configurations can be simulated by one or more phased, delayed, or linear array transducers. In addition to the flexibility of arrays to adapt to various geometries, the arrays allow more control over the apodization of the beams. This is important for maintaining a narrow beam and a narrow angular spectrum. Beam width and angular spectrum are also controlled by transducers which are focussed in a variety of geometric configurations, such as conical, spherical, cylindrical, bicylindrical, concave and convex. In the configurations shown in the figures, identical transducers are used for the transmitters and receivers. However, this need not be the case as the angular spectra of each can be chosen independently to achieve an overall angular spectrum. These transducers may be immersion-type, electro-magnetic acoustic, or other known transducer formats.

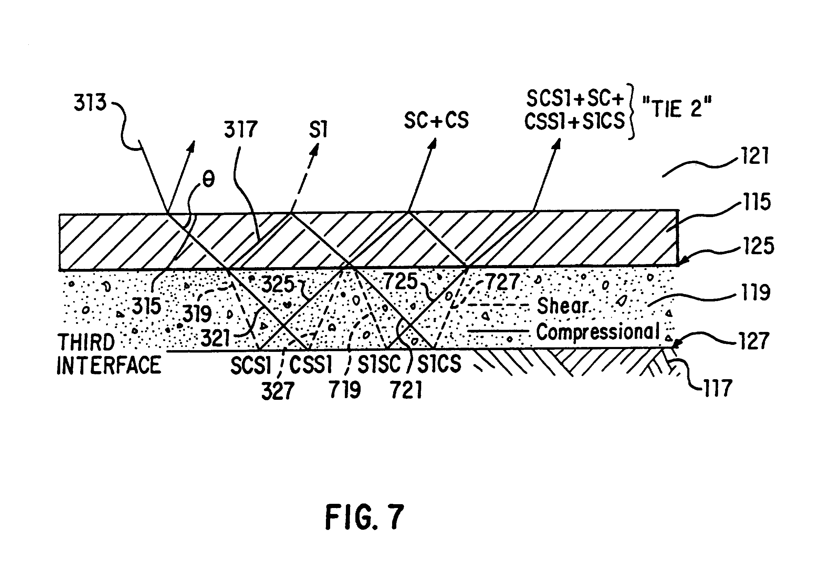

Figure 7 illustrates higher order TIE's which may have potential interest for hydraulic isolation determination. These higher order TIE's are later reverberations of originally transmitted pulse 313 (i.e., casing signals S1, S2, S3, etc.) which produce components similar to components 323-329 of Fig. 3. For example, reverberation S1 produces the following components in second material 119: S1SC 725 and S1CS 727. These two components are reflections from third interface 127 of shear component 719 and compressional component 721 respectively. Components SS and CC are not shown here since they are not as easily detected as arrival SC+CS 731 which propagates back through casing 115 to receiver 331 (not shown). However, SS and CC may be used. The higher order TIE's have larger amplitudes than the first order TIE's and appear at different offsets and delays. Therefore, they are easier to detect and record. However, the disadvantage of using higher order TIE's is that they interrogate more widely separated points on third interface 127 and may suffer greater degradation of resolution and signal reduction.

If the annulus between casing 115 and earth formation 117 contains fluid, only one first order TIE occurs, the compressional-compressional component 329. This is because fluids support only compressional waves. The angles and times associated with compressional-compressional component 329 in a fluid-filled annulus are quite similar to those of the shear component 323 in an annulus filled with cement 119. The previous knowledge of the phase of second material 119 against casing 115 aids in interpreting hydraulic isolation determination results. This information is acquired beforehand using standard UCE or from an interpretation of the casing reverberations S1, S2, S3, etc.

First material reverberations S1, S2, S3, etc. are all discrete signal components which have interacted, at least once, with both interfaces of the casing. The energy making up S1 travels through first interface 123 from borehole fluid 121. It then follows a path through first material 115 reflecting off second interface 125. It again crosses first material 115 as it follows a path back to first interface 123. The time delay of the arrival of S1, as a result of this travel path, along with the knowledge of some relevant velocities and angles, provides a means of calculating the casing thickness. Also, since S1 has reflected from second interface 125, its amplitude is somewhat dependent on the acoustic impedance of second material 119. Analysis of S1 could provide an indicator of whether second material 119 is a fluid or cement. Analysis for casing thickness or for second material 119 may alternatively be performed using later casing echoes or some combination of casing echoes.

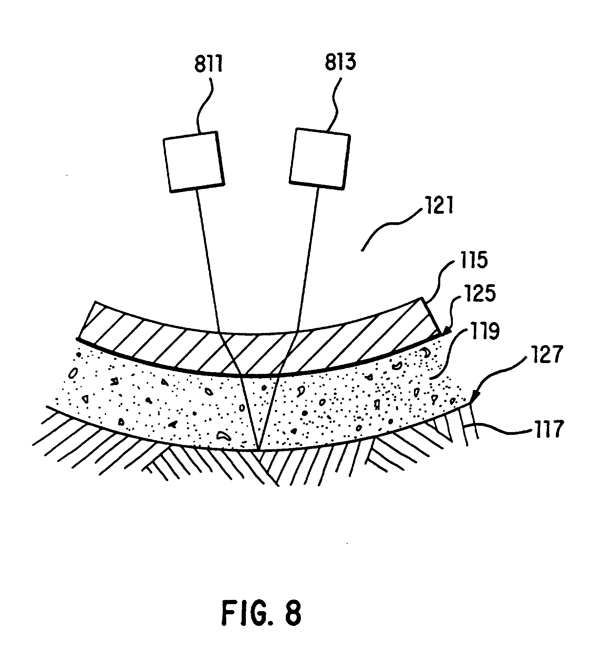

Figures 3, 4, and 6 illustrate embodiments of the present invention where the transducers are configured to transmit and receive signals along an axial portion of the borehole wall. In Figure 8, an alternative embodiment is illustrated. Transducers are configured to transmit and receive signals along a circumferential portion of the borehole wall. In this configuration, a signal is transmitted from transmitter 811 into casing 115. Resulting signals from the various interfaces are received by receiver 813. As can be seen from Figure 8, the angles the signal encounters as it passes through casing 115 and second material 119 and its reflection from the different interfaces is markedly different from those shown in the previous configurations due to the curvature of the borehole wall. The configuration of Figure 8 makes it easier to assess the effect of out-of-plane rays.

The hydraulic isolation determination of the present invention is valuable for two applications in addition to the interrogation of a completed borehole. First, it is useful before fill material is placed in the annulus. This is advantageous because it permits determination of the geometry of the annulus for computing the required volume of cement and provides a baseline for aiding later interpretation. Another advantage obtained by using the invention before cement is pumped into the annulus is the detection of the casing location with respect to the formation. Second, the present invention permits information to be obtained after placement of the fill material and before hydration. The results obtained from these measurements are valuable for hydraulic isolation determination after hydration.

In conclusion, the present invention provides new and improved techniques for evaluating and characterizing fill material in the annulus between a casing and an earth formation in a borehole, as well as for determining the casing thickness. While the above is a complete description of the preferred embodiment of the invention, various alternatives, modifications, and equivalents may be used. For example, there is a trade-off between excluding unwanted echoes with a narrower angular spectrum and including wanted echoes with a wider angular spectrum. Therefore, excitation and detection of a carefully chosen and well-defined range of angles is essential. This is achieved by using focussed transducers or by choosing the width and bandwidth of the transducer to allow significant diffraction. A number of transducers may affect the desired results including concave spherically-focussed transducers, convex, cylindrical, bicylindrical, sonic and electronically focussed. Additionally, in the configurations shown in the figures, identical transducers are used for the transmitters and receivers. However, this need not be the case as the angular spectra of each can be chosen independently to achieve an overall angular spectrum. Further, an infinite number of permutations and combinations of the described embodiments are possible including transmitter and receiver assemblies which are neither axially or circumferentially aligned.

Another aspect of the invention is its applicability to borehole measurements before hydration of fill material in the annulus between the casing and the earth formation. Such information may be useful for a number of applications. Therefore, the above description should not be taken as limiting the scope of the invention which is defined by the appended claims.

## Claims

1. An apparatus for interrogating a cased borehole environment to determine properties of materials present in the borehole, the apparatus comprising a housing (210), a transmitter (311) mounted in the housing (210) for introducing acoustic energy into the casing (115), a receiver (331) mounted in the housing (210) at a predetermined distance from the transmitter (311) for detecting acoustic energy, and processing means (218) for analyzing the detected energy and generating data representative of properties of materials in the borehole (111), characterized in that the transmitter (311) transmits acoustic energy into the casing (115) at a predetermined initial angle (q) substantially between the compressional-critical angle and the shear-critical angle to a first interface (123), the acoustic energy propagating through a second material and a third material to a second interface (125) and a third interface (127) in the borehole (111), the receiver (331) detecting acoustic shear energy in the form of a beam which arrives at the first interface (123) propagating at an angle corresponding to the predetermined initial angle (q), and the processing means (218) analyzing detected shear energy and generating data determinative of the path along which the acoustic energy has travelled and representative of properties of the materials in the borehole (111) and the nature of the third interface (127).

2. Apparatus as claimed in claim 1, wherein the properties of the materials represented by the data include thickness and/or impedance of materials in the borehole (111).

3. Apparatus as claimed in claim 2, wherein the processing means determines relative impedance of the second material and the third material in accordance with an associated reflection coefficient for a particular interface.

4. Apparatus as claimed in claim 2 or 3, wherein the processing means (218) determines impedance amplitude in accordance with the equation:

$$A = T_2\, e^{-\alpha_3 l_3} R_3$$

where $T_n$ is the transmission coefficient of a particular interface;
$R_n$ is the reflection coefficient of a particular material;
$\alpha_n$ is the attenuation coefficient of a particular material; and
$l_n$ is the thickness of a particular material.

5. Apparatus as claimed in any preceding claim, wherein the receiver (331) comprises a plurality of receivers (331A, 331B) each positioned at a predetermined distance from the transmitter (311) to detect the shear energy as a function of the width of the second material.

6. Apparatus as claimed in any preceding claim, wherein the transmitter (311) comprises a plurality of transmitters (311A, 311B) spaced at predetermined distances from each other.

7. Apparatus as claimed in any preceding claim, wherein the transmitter (311) and the receiver (331) are axially aligned along a portion of the housing (210).

8. Apparatus as claimed in any one of claims 1 to 6, wherein the transmitter (311) and the receiver (331) are circumferentially aligned along a portion of the housing (210).

9. Apparatus as claimed in any preceding claim, wherein the corresponding angle at which shear energy is detected is substantially equal, but opposite to the predetermined angle (q) at which acoustic energy is introduced into the casing (115).

10. Apparatus as claimed in any preceding claim, wherein the receiver (311) has sufficient width sensitivity to receive independent resulting signal components comprising:

   a shear-shear component (SS) representing a shear reflection of the shear signal entering a second material at a second interface (125) between the first material and the second material;
   a shear-compressional component (SC) representing a compressional reflection of the shear signal entering the second material at the second interface (125);
   a compressional-shear component (CS) representing a shear reflection of the compressional signal entering the second material at the second interface (125); and
   a compressional-compressional component (CC) representing a compressional reflection of the compressional signal entering the second material at the second interface (125).

11. A method of interrogating a cased borehole environment to determine properties of materials present in the borehole, comprising (a) introducing acoustic energy into the casing at a first position in the borehole, (b) receiving the propagated acoustic energy at a second position in the borehole a predetermined distance from the first position, and (c) analyzing the received energy and generating data determinative of the path along which the acoustic energy has travelled, characterized by introducing the acoustic energy into the casing at a predetermined initial angle substantially between the compressional-critical angle and the shear-critical angle to a first interface so as to propagate through the casing at the predetermined angle, the acoustic energy propagating through a second material and a third material to a second interface and a third interface in the borehole, detecting a shear component of the received energy, and analyzing the shear component to generate data representative of properties of the materials in the borehole and the nature of the third interface.

12. A method as claimed in claim 11, wherein steps (a) to (c) are performed (i) before cement is pumped into an annulus between the first material and a formation, (ii) after cement is pumped into an annulus between the first material and a formation and before hydration of the cement occurs, and (iii) after hydration of the cement occurs.

13. A method as claimed in claim 12, further comprising comparing the results of at least two of steps (i), (ii) and (iii) to determine the quality of a bond formed between materials in the borehole.

14. A method as claimed in any one of claims 11, 12 or 13, wherein relative impedance data for the materials is generated in accordance with an associated reflection coefficient for a particular interface.

15. A method as claimed in claim 14, wherein impedance amplitude data is generated in accordance with the equation:

$$A = T_2 \, e^{-\alpha_3 l_3} R_3$$

where, $T_n$ is the transmission coefficient at a particular interface;
$R_n$ is the reflection coefficient of a particular material;
$\alpha_n$ is the attenuation coefficient of a particular material; and
$l_n$ is the thickness of a particular material.

**Patentansprüche**

1. Eine Vorrichtung für die Untersuchung der Umgebung eines ausgekleideten Bohrlochs zum Bestimmen von Eigenschaften von in dem Bohrloch vorhandenen Materialien, welche Vorrichtung ein Gehäuse (210), einen Sender (311), der in dem Gehäuse (210) montiert ist für das Einspeisen von akustischer Energie in die Auskleidung (115), einen Empfänger (331), der in dem Gehäuse (210) in einem vorbestimmten Abstand von dem Sender (311) für das Erfassen akustischer Energie angeordnet ist, und Verarbeitungsmittel (218) für das Analysieren der erfaßten Energie und Erzeugen von Daten, die für die Eigenschaften von Materialien in dem Bohrloch (111) repräsentativ sind, umfaßt, dadurch gekennzeichnet, daß der Sender (311) akustische Energie in die Auskleidung (115) unter einem vorbestimmten Anfangswinkel (q) aussendet, der im wesentlichen zwischen dem kompressionskritischen Winkel und dem scherkritischen Winkel liegt, zu einer ersten Grenzfläche (123), wobei die akustische Energie sich durch ein zweites Material und ein drittes Material zu einer zweiten Grenzfläche (125) und einer dritten Grenzfläche (127) in dem Bohrloch (111) ausbreitet, daß der Empfänger (331) akustische Scherenergie in Form eines Strahles erfaßt, der an der ersten Grenzfläche (123) eintrifft und sich unter einem Winkel entsprechend dem vorbestimmten Anfangswinkel (q) ausbreitet, und daß die Verarbeitungsmittel (218) erfaßte Scherenergie analysiert und Daten erzeugt, die bestimmend für den Pfad sind, längs welchem sich die akustische Energie ausgebreitet hat, und repräsentativ sind für Eigenschaften der Materialien in dem Bohrloch (111) und die Natur der dritten Grenzfläche (127).

2. Vorrichtung nach Anspruch 1, bei der die Eigenschaften der durch die Daten repräsentierten Materialien die Dicke und/oder Impedanz von Materialien in dem Bohrloch (111) einschließen.

3. Vorrichtung nach Anspruch 2, bei der die Verarbeitungsmittel die relative Impedanz des zweiten Materials und des dritten Materials in Übereinstimmung mit einem zugeordneten Reflexionskoeffizienten für eine bestimmte Grenzfläche bestimmen.

4. Vorrichtung nach Anspruch 2 oder 3, bei der die Verarbeitungsmittel (218) die Impedanzamplitude gemäß der Gleichung:

$$A = T_2 \, e^{-\alpha_3 l_3} R_3$$

bestimmen, worin $T_n$ der Transmissionskoeffizient einer bestimmten Grenzfläche ist;
$R_n$ der Reflexionskoeffizient eines bestimmten Materials ist;
$\alpha_n$ der Dämpfungskoeffizient eines bestimmten Materials ist; und
$l_n$ die Dicke des bestimmten Materials ist.

5. Vorrichtung nach einem der vorangehenden Ansprüche, bei der der Empfänger (331) eine Mehrzahl von Empfängern (331A, 331B) umfaßt, jeweils positioniert in einem vorbestimmten Abstand von dem Sender (311) zum Erfassen von Scherenergie als eine Funktion der Breite des zweiten Materials.

6. Vorrichtung nach einem der vorangehenden Ansprüche, bei der der Sender (311) eine Mehrzahl von Sendern (311A, 311B) in vorbestimmten Abständen voneinander umfaßt.

7. Vorrichtung nach einem der vorangehenden Ansprüche, bei der der Sender (311) und der Empfänger (331) axial längs eines Abschnitts des Gehäuses (210) ausgefluchtet sind.

8. Vorrichtung nach einem der Ansprüche 1 bis 6, bei der der Sender (311) und der Empfänger (331) in Umfangsrichtung längs eines Abschnitts des Gehäuses (210) ausgefluchtet sind.

9. Vorrichtung nach einem der vorangehenden Ansprüche, bei der der entsprechende Winkel, unter welchem Scherenergie erfaßt wird, im wesentlichen gleich, jedoch entgegengesetzt dem vorbestimmten Winkel (q) ist, unter welchem akustische Energie in die Auskleidung (115) eingespeist wird.

10. Vorrichtung nach einem der vorangehenden Ansprüche, bei der der Empfänger (311) eine hinreichende Breitenempfindlichkeit hat, um unabhängig resultierende Signalkomponenten zu empfangen, umfassend: eine Scher-Scher-Komponente (SS), welche eine Scherreflexion des Schersignals repräsentiert, das in ein zweites Material an einer zweiten Grenzfläche (125) zwischen dem ersten und dem zweiten Material eindringt;

eine Scher-Kompressions-Komponente (SC), die eine Kompressionsreflexion des Schersignals repräsentiert, das in das zweite Material an der zweiten Grenzfläche (125) eindringt;
eine Kompressions-Scher-Komponente (CS), die eine Scherreflexion des Kompressionssignals repräsentiert, das in das zweite Material an der zweiten Grenzfläche (125) eindringt; und
eine Kompressions-Kompressions-Komponente (CC), die eine Kompressionsreflexion des Kompressionssignals repräsentiert, das in das zweite Material an der zweiten Grenzfläche (125) eindringt.

**11.** Ein Verfahren zum Untersuchen der Umgebung eines ausgekleideten Bohrlochs zum Bestimmen von Eigenschaften von in dem Bohrloch vorhandenen Materialien, umfassend (a) Einspeisen von akustischer Energie in die Auskleidung an einer ersten Position des Bohrlochs, (b) Empfangen der ausgebreiteten akustischen Energie an einer zweiten Position in dem Bohrloch in einem vorbestimmten Abstand von der ersten Position, und (c) Analysieren der empfangenen Energie und Erzeugen von Daten, die für den Pfad bestimmend sind, längs welchem die akustische Energie gelaufen ist, gekennzeichnet durch das Einspeisen der akustischen Energie in die Auskleidung unter einem vorbestimmten Anfangswinkel, der im wesentlichen zwischen dem kompressionskritischen Winkel und dem scherkritischen Winkel ist, zu einer ersten Grenzfläche, so daß sie sich durch die Auskleidung unter einem vorbestimmten Winkel ausbreitet, der akustischen Energie, die sich durch ein zweites Material und ein drittes Material ausbreitet zu einer zweiten Grenzfläche und einer dritten Grenzfläche in dem Bohrloch, Erfassen einer Scherkomponente der empfangenen Energie, und Analysieren derScherkomponente zum Erzeugen von Daten, die repräsentativ für Eigenschaften der in dem Bohrloch befindlichen Materialien und die Natur der dritten Grenzfläche repräsentativ sind.

**12.** Ein Verfahren nach Anspruch 11, bei dem die Schritte (a) bis (c) ausgeführt werden, (i) bevor Zement in einen Ringraum zwischen dem ersten Material und einer Formation gepumpt wird, (ii) nachdem Zement in einen Ringraum zwischen dem ersten Material und einer Formation gepumpt worden ist und vor Abbinden des Zements, und (iii) nach Abbinden des Zements.

**13.** Ein Verfahren nach Anspruch 12, ferner umfassend den Vergleich der Resultate mindestens zweier der Schritte (i), (ii) und (iii) zum Bestimmen der Qualität einer zwischen Materialien in dem Bohrloch gebildeten Haftung.

**14.** Ein Verfahren nach einem der Ansprüche 11, 12 oder 13, bei dem relative Impedanzdaten für die Materialien entsprechend einem zugeordneten Reflexionskoeffizienten für eine bestimmte Grenzfläche erzeugt werden.

**15.** Ein Verfahren nach Anspruch 14, bei dem Impedanzamplitudendaten gemäß der Gleichung:

$$A = T_2 \, e^{-\alpha_3 l_3} R_3$$

erzeugt werden, worin $T_n$ der Transmissionskoeffizient einer bestimmten Grenzfläche ist;
$R_n$ der Reflexionskoeffizient eines bestimmten Materials ist;
$\alpha_n$ der Dämpfungskoeffizient eines bestimmten Materials ist; und
$l_n$ die Dicke des bestimmten Materials ist.

**Revendications**

**1.** Appareil pour interroger un environnement de trou de forage tubé pour déterminer des propriétés de matériaux présents dans le trou de forage, l'appareil comprenant un boîtier (210), un transmetteur (311) monté dans le boîtier (210) pour introduire de l'énergie acoustique dans le tubage (115), un récepteur (331) monté dans le boîtier (210) à une distance prédéterminée du transmetteur (311) pour détecter l'énergie acoustique, et des moyens de traitement (218) pour analyser l'énergie détectée et générer des données représentatives de propriétés des matériaux dans le trou de forage (111), caractérisé en ce que le transmetteur (311) transmet l'énergie acoustique dans le tubage (115) à un angle initial prédéterminé (q) sensiblement entre l'angle de compression critique et l'angle de cisaillement critique à une première interface (123), l'énergie acoustique se propageant à travers un deuxième matériau et un troisième matériau jusqu'à une deuxième interface (125) et une troisième interface (127) dans le trou de forage (111), le récepteur (331) détectant l'énergie de cisaillement acoustique sous la forme d'un faisceau qui arrive au niveau de la première interface (123) en se propageant selon un angle correspondant à l'angle initial prédéterminé (q), et les moyens de traitement (218) analysant l'énergie de cisaillement détectée et générant des données déterminatives du trajet parcouru par l'énergie acoustique et représentatives de propriétés des matériaux dans le trou de forage (111) et de la nature de la troisième interface (127).

**2.** Appareil selon la revendication 1, dans lequel les propriétés des matériaux représentées par les données comprennent l'épaisseur et/ou l'impédance de matériaux dans le trou de forage (111).

**3.** Appareil selon la revendication 2, dans lequel les moyens de traitement déterminent l'impédance relative du deuxième matériau et du troisième matériau conformément à un coefficient de réflexion associé pour une interface particulière.

4. Appareil selon la revendication 2 ou 3, dans lequel les moyens de traitement (218) déterminent l'amplitude d'impédance conformément à l'équation :

$$A = T_2\, e^{-\alpha_3 l_3}\, R_3$$

où $T_n$ est le coefficient de transmission d'une interface particulière ;
$R_n$ est le coefficient de réflexion d'un matériau particulier ;
$\alpha_n$ est le coefficient d'atténuation d'un matériau particulier ; et
$l_n$ est l'épaisseur d'un matériau particulier.

5. Appareil selon l'une quelconque des revendications précédentes, dans lequel le récepteur (331) comprend une pluralité de récepteurs (331A, 331B) positionnés chacun à une distance prédéterminée du transmetteur (311) pour détecter l'énergie de cisaillement en fonction de la largeur du deuxième matériau.

6. Appareil selon l'une quelconque des revendications précédentes, dans lequel le transmetteur (311) comprend une pluralité de transmetteurs (331A, 331B) espacés les uns des autres à une distance prédéterminée.

7. Appareil selon l'une quelconque des revendications précédentes, dans lequel le transmetteur (311) et le récepteur (331) sont alignés axialement le long d'une partie du boîtier (210).

8. Appareil selon l'une quelconque des revendications 1 à 6, dans lequel le transmetteur (311) et le récepteur (331) sont alignés circonférentiellement le long d'une partie du boîtier (210).

9. Appareil selon l'une quelconque des revendications précédentes, dans lequel l'angle correspondant auquel l'énergie de cisaillement est détectée est sensiblement égal, mais opposé à l'angle prédéterminé (q) auquel l'énergie acoustique est introduite dans le tubage (115).

10. Appareil selon l'une quelconque des revendications précédentes, dans lequel le récepteur (311) a une sensibilité de largeur suffisante pour recevoir des composantes de signaux résultantes indépendantes comprenant :

une composante de cisaillement-cisaillement (SS) représentant une réflexion de cisaillement du signal de cisaillement pénétrant dans un deuxième matériau au niveau d'une deuxième interface (125) entre le premier matériau et le deuxième matériau ;
une composante de cisaillement-compression (SC) représentant une réflexion de compression du signal de cisaillement pénétrant dans le deuxième matériau au niveau de la deuxième interface (125) ;
une composante de compression-cisaillement (CS) représentant une réflexion de cisaillement du signal de compression pénétrant dans le deuxième matériau au niveau de la deuxième interface (125) ; et
une composante de compression-compression (CC) représentant une réflexion de compression du signal de compression pénétrant dans le deuxième matériau au niveau de la deuxième interface (125).

11. Méthode d'interrogation d'un environnement de trou de forage tubé pour déterminer des propriétés de matériaux présents dans le trou de forage, comprenant (a) l'introduction d'énergie acoustique dans le tubage au niveau d'une première position dans le trou de forage, (b) la réception de l'énergie acoustique propagée au niveau d'une deuxième position dans le trou de forage à une distance prédéterminée de la première position, et (c) l'analyse de l'énergie reçue et la génération de données déterminatives du trajet parcouru par l'énergie acoustique, caractérisée par l'introduction de l'énergie acoustique dans le tubage selon un angle initial prédéterminé sensiblement entre l'angle critique de compression et l'angle critique de cisaillement au niveau d'une première interface afin qu'elle se propage à travers le tubage selon un angle prédéterminé, l'énergie acoustique se propageant à travers un deuxième matériau et un troisième matériau jusqu'à une deuxième interface et une troisième interface dans le trou de forage, la détection d'une composante de cisaillement de l'énergie reçue, et l'analyse de la composante de cisaillement pour générer des données représentatives de propriétés des matériaux dans le trou de forage et de la nature de la troisième interface.

12. Méthode selon la revendication 11, dans laquelle les étapes (a) à (c) sont réalisées (i) avant que du ciment soit pompé dans un anneau entre le premier matériau et une formation, (ii) après le pompage du ciment dans un anneau entre le premier matériau et une formation et avant l'hydratation du ciment, et (iii) après l'hydratation du ciment.

13. Méthode selon la revendication 12, comprenant en outre la comparaison des résultats à au moins deux des étapes (i), (ii), (iii) pour déterminer la qualité d'une liaison formée entre des matériaux dans le trou de forage.

14. Méthode selon l'une quelconque des revendications 11, 12 ou 13, dans laquelle les données d'impédance relative pour les matériaux sont générées conformément à un coefficient de réflexion associé pour une interface particulière.

15. Méthode selon la revendication 14, dans laquelle les données d'amplitude d'impédance sont générées conformément à l'équation :

$$A = T_2\, e^{-\alpha_3 l_3} R_3$$

où $T_n$ est le coefficient de transmission d'une interface particulière ;
$R_n$ est le coefficient de réflexion d'un matériau particulier ;
$\alpha_n$ est le coefficient d'atténuation d'un matériau particulier ; et
$l_n$ est l'épaisseur d'un matériau particulier.

FIG. 1

EP 0 549 419 B1

FIG. 2

16

FIG. 3

EP 0 549 419 B1

FIG. 4A

FIG. 4B

FIG. 4C

EP 0 549 419 B1

FIG. 5A

FIG. 5B

FIG. 5C

EP 0 549 419 B1

FIG. 6A

FIG. 6B

EP 0 549 419 B1

FIG. 6C

THIRD INTERFACE (A)

THIRD INTERFACE (B)

311

331A

331B

T

R

R

123
115
125
119A
127A
119B
127B
117

EP 0 549 419 B1

313

317    S1    SC+CS    SCS1+SC+ ⎱ "TIE 2"
                      CSS1+S1CS ⎰

θ

SCS1+SC+ "TIE 2"

121

115

125

325    725    727

119

315    319    321

327    719    721

THIRD
INTERFACE    SCS1 / CSS1 / S1SC / S1CS

--- Shear
─── Compressional

127

117

**FIG. 7**

EP 0 549 419 B1

811  813

121

115

125

119

127

117

**FIG. 8**